# EUROPEAN PATENT APPLICATION

(11) **EP 4 489 491 A1**
(43) Date of publication of application: **08.01.2025**
(21) Application number: 22927893.2
(22) Date of filing: 28.02.2022
(51) Int. Cl.: H04W 72/04, H04W 76/10, H04W 76/11

(54) **SENSING BY PROXY COMMUNICATION METHOD AND COMMUNICATION DEVICE**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/078443
(87) International publication number: WO 2023/159612

(57) **Abstract**

The present disclosure provides a sensing by proxy (SBP) communication method and communication device. The communication method comprises: an access point device receives a first SBP request frame from an SBP request station device, wherein the first SBP request frame comprises a demand for requesting the access point device to serve as a proxy access point device to initiate a first sensing measurement; the access point device sends a first message frame to the SBP request station device, wherein the first message frame carries a sensing measurement establishment identifier.

## Description

### TECHNICAL FIELD

This disclosure relates to the field of wireless communication, and more specifically, to a communication method and communication device for sensing by proxy (SBP).

### BACKGROUND

WLAN (Wireless Local Area Network) has the characteristics of flexibility, mobility and low cost. With the development of communication technology and the increase of user demand, the application research on WLAN is being gradually deepened. For example, WLAN sensing is currently being researched, and its main application scenarios include location discovery in dense environments (home environment and enterprise environment), proximity detection, presence detection, and the like.

### SUMMARY

According to various embodiments of this disclosure, the following technical solutions are provided.

According to an exemplary embodiment of this disclosure, a communication method for sensing by proxy (SBP) is provided. The communication method may include: receiving, by an access point (AP), a first SBP request frame from an SBP requesting station, where the first SBP request frame includes a requirement for requesting the AP to initiate a first sensing measurement as a proxy AP; and sending, by the AP, a first message frame to the SBP requesting station, where the first message frame carries a sensing measurement setup identifier.

According to an exemplary embodiment of this disclosure, a communication method for SBP is provided. The communication method may include: sending, by an SBP requesting station, a first SBP request frame to an AP, where the first SBP request frame includes a requirement for requesting the AP to initiate a first sensing measurement as a proxy AP; and receiving, by the SBP requesting station, a first message frame from the AP, where the first message frame carries a sensing measurement setup identifier.

According to an exemplary embodiment of this disclosure, a communication device for SBP is provided. The communication device may include: a transceiving module, configured to: receive a first SBP request frame from an SBP requesting station, where the first SBP request frame includes a requirement for requesting an AP to initiate a first sensing measurement as a proxy AP; and send a first message frame to the SBP requesting station, where the first message frame carries a sensing measurement setup identifier.

According to an exemplary embodiment of this disclosure, a communication device for SBP is provided. The communication device may include: a transceiving module, configured to: send a first SBP request frame to an AP, where the first SBP request frame includes a requirement for requesting the AP to initiate a first sensing measurement as a proxy AP; and receive a first message frame from the AP, where the first message frame carries a sensing measurement setup identifier.

According to an exemplary embodiment of this disclosure, an electronic device is provided. The electronic device includes a memory, a processor, and a computer program stored on the memory and executable on the processor. The processor is configured to, upon executing the computer program, implement the method as described above.

According to an exemplary embodiment of this disclosure, a computer-readable storage medium is provided. The computer-readable storage medium stores a computer program thereon, where the computer program is used for, upon being executed by a processor, implementing the method as described above.

The technical solutions provided by the exemplary embodiments of this disclosure improve the mechanism of SBP measurement.

### BRIEF DESCRIPTION OF THE DRAWINGS

The above and other features of embodiments of this disclosure will be more apparent by describing in detail exemplary embodiments of this disclosure with reference to the accompanying drawings, in which:
FIG. 1 illustrates exemplary manners of WLAN sensing;
FIG. 2 is a flowchart illustrating a communication method according to an exemplary embodiment;
FIG. 3 is a flowchart illustrating a communication method for a pre-allocation mode according to an exemplary embodiment;
FIG. 4 is a flowchart illustrating a communication method for a pre-allocation mode according to an exemplary embodiment;
FIG. 5 is a flowchart illustrating a communication method for a pre-allocation mode according to an exemplary embodiment;
FIG. 6 illustrates a process of interactive communication for a pre-allocation mode according to an exemplary embodiment;
FIG. 7 is a flowchart illustrating a communication method for a post-allocation mode according to an exemplary embodiment;
FIG. 8 illustrates a process of interactive communication for a post-allocation mode according to an exemplary embodiment;
FIG. 9 is a flowchart illustrating another communication method according to an exemplary embodiment; and
FIG. 10 is a block diagram illustrating a communication device according to an exemplary embodiment.

### DETAILED DESCRIPTION

The following description with reference to the accompanying drawings is provided to assist in a comprehensive understanding of various embodiments of this disclosure as defined by the appended claims and their equivalents. Various embodiments of this disclosure include various specific details, which are to be regarded as exemplary only. In addition, descriptions of well-known technologies, functions, and constructions may be omitted for clarity and conciseness.

The terms and words used in this disclosure are not limited to the bibliographical meanings, but, are merely used by the inventor to enable a clear and consistent understanding of this disclosure. Accordingly, for those skilled in the art, the description of various embodiments of this disclosure is provided for purposes of illustration only and not for purposes of limitation.

It should be understood that as used herein, the singular forms "a", "an", "said" and "the" may include the plural forms unless the context clearly dictates otherwise. It should be further understood that the word "comprises/comprising" used in this disclosure refers to the presence of described features, integers, steps, operations, elements and/or components, but does not exclude the presence or addition of one or more other features, integers, steps, operations, elements, components and/or groups thereof.

It will be understood that, although the terms "first", "second", and the like may be used herein to describe various elements, these elements should not be limited by these terms. These terms are only used to distinguish one element from another. Thus, a first element discussed below could be termed a second element without departing from the teachings of exemplary embodiments.

It will be understood that when an element is referred to as being "connected" or "coupled" to another element, it can be directly connected or coupled to the other element or intervening elements may also be present. Additionally, "connected" or "coupled" as used herein may include wireless connection or wireless coupling. As used herein, the term "and/or" or the expression "at least one/at least one of" includes any and all combinations of one or more of the associated items as listed.

Unless otherwise defined, all terms (including technical terms and scientific terms) used herein have the same meaning as commonly understood by one of ordinary skill in the art to which this disclosure belongs.

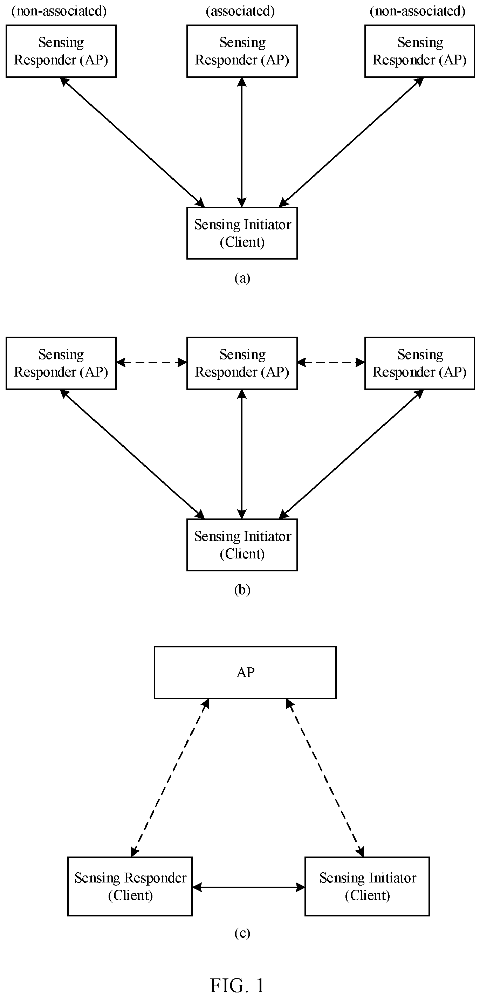

FIG. 1 illustrates exemplary manners of WLAN sensing.

The process of WLAN sensing may be as follows. The initiator initiates WLAN sensing (e.g., initiates a WLAN sensing session), and multiple responders may respond to it. The specific possible manners may be as shown in (a), (b) and (c) of FIG. 1.

Referring to (a) in FIG. 1, when a WLAN sensing initiator (e.g., a client) initiates WLAN sensing, multiple associated or non-associated WLAN sensing responders (e.g., three access points (APs)) may respond to it. Here, "associated" may refer to that an association connection for communication has been set up between the initiator and the responder(s), and "non-associated" may refer to that no association connection for communication is set up between the initiator and the responder(s).

As examples, the client may include, but are not limited to, cellular phones, smart phones, wearable devices, computers, personal digital assistants (PDAs), personal communication system (PCS) devices, personal information managers (PIMs), personal navigation devices (PND), GPS, multimedia devices, Internet of Things (IoT) devices, and the like.

Access point (AP) may be a wireless switch in a wireless network, or an access device in the wireless network. AP may include software applications and/or circuitry to enable other types of nodes in the wireless network to communicate with the outside and inside of the wireless network through AP. As an example, AP may be a terminal device or a network device equipped with a Wi-Fi (Wireless Fidelity) chip.

(b) in FIG. 1 is similar to (a) in FIG. 1 except that, in (b) of FIG. 1, communication can be performed between responders (APs).

Referring to (c) in FIG. 1, both the WLAN sensing initiator and the WLAN sensing responder may be clients, and both of them can communicate by connecting to the same AP.

Although it is shown in (a), (b) and (c) of FIG. 1 that the client acts as the initiator and the AP acts as the responder, this disclosure is not limited thereto. For example, AP may act as the initiator, and the client may act as the responder. In addition, the numbers of initiators and responders are not limited to those as shown in (a), (b) and (c) of FIG. 1.

As an illustrative embodiment, a conventional WLAN sensing measurement process may include: a WLAN sensing session setup phase, a WLAN sensing measurement setup phase, and a WLAN sensing measurement termination phase. In the WLAN sensing session setup phase, the initiator may initiate one or more WLAN sensing sessions. In the WLAN sensing measurement setup phase, the initiator may set up one or more WLAN sensing measurements. For example, for each WLAN sensing session, the initiator may set up one or more WLAN sensing measurements, where the set up one or more WLAN sensing measurements may be identified or differentiated by a measurement setup ID. Each set up sensing measurement may include one or more sensing measurement events, and a sensing measurement operation is performed within each sensing measurement event. In addition, reporting of sensing measurement results can optionally be performed. In the WLAN sensing measurement termination phase, the sensing measurements are stopped and the sensing session is terminated. However, this is only exemplary, and various phases of WLAN sensing measurement may be divided differently.

In order to efficiently utilize the spectrum, an SBP (sensing by Proxy) mode can also be used. For the SBP process in the SBP mode, a non-AP STA (station) may send an SBP request frame that constitutes "SBP request" to an AP STA (SBP-capable AP STA) that supports SBP. According to an embodiment of this disclosure, the non-AP STA may refer to a non-AP device (an example of which may be similar to the embodiment of the client described above), which may be referred to as "SBP requesting STA" or "SBP requesting station device" hereinafter. The AP STA supporting SBP may refer to an AP capable of initiating SBP sensing measurements as a proxy AP responding to an SBP requesting STA, and may be referred to as "proxy AP", "AP", "SBP AP", "Proxy AP" hereinafter.

In addition, the AP STA receiving the "SBP request" may send an SBP response frame to the SBP requesting STA to indicate whether to reject or accept the request. The AP STA accepting the request can initiate WLAN sensing process (SBP sensing process) with one or more non-AP STAs by using operating parameters derived from the parameters indicated in the SBP request frame. Such one or more non-AP STAs may be referred to as responders. In some embodiments of this disclosure, the SBP requesting STA may participate in WLAN sensing measurement as a responder. Alternatively, the SBP requesting STA may not act as a responder, That is, it does not participate in the WLAN sensing measurement.

In addition, the measurement results obtained during the WLAN sensing process generated by the "SBP request" can be reported to the "SBP requesting STA".

Proxy AP can reply whether to accept or reject the SBP requesting STA through SBP response, but the mechanism for SBP response is inadequate at present. Furthermore, in the SBP scenario, the mechanism for how the SBP AP set up the sensing measurement (e.g., how the SBP AP allocate the sensing measurement setup (or setup) identifier (ID) to the SBP requesting STA and/or the responder) is inadequate.

In view of this, a communication method and a communication device according to the concepts of some embodiments of this disclosure are provided.

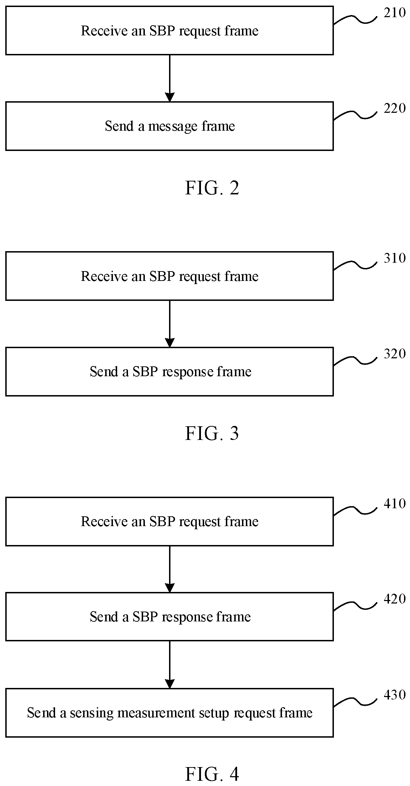

FIG. 2 is a flowchart illustrating a communication method according to an exemplary embodiment. The communication method shown in FIG. 2 can be applied to an AP device (also referred to as "AP", "proxy AP", or "SBP AP" herein).

Referring to FIG. 2, in step 210, the AP may receive an SBP request frame from the SBP requesting STA, where the SBP request frame may include a requirement for requesting the AP to initiate a sensing measurement as a proxy AP. For example, the requirement of sensing measurement may include accuracy of sensing measurement (e.g., how many responders need to participate in the sensing measurement to achieve the accuracy), transmission power, sensing measurement bandwidth, and the like. However, this is only exemplary and this disclosure is not limited thereto. In addition, the content included in the SBP request frame is not limited to the forgoing embodiments. For example, the SBP request frame may include information requesting the AP to act as the proxy AP and requirement for expected sensing measurement. Moreover, in this document, the SBP requesting STA may be referred to as "SBP STA" or "SBP requesting STA" for short.

In step 220, the AP may send a message frame to the SBP requesting STA, where the message frame may carry a sensing measurement setup ID. According to an embodiment of this disclosure, the sensing measurement setup ID may be used to identify subsequent sensing measurements (e.g., sensing measurements that the SBP requesting STA participates in) or measurement result reports (e.g., measurement result feedback). According to different operations of the AP after receiving the SBP request frame, the message frame may have different formats and contents, which will be described in detail later.

According to an embodiment of this disclosure, the AP may allocate the sensing measurement setup ID to the SBP requesting STA and/or the responder in a pre-allocation mode or a post-allocation mode. The communication method according to some embodiments of this disclosure is described below based on these two manners respectively.

FIG. 3 is a flowchart illustrating a communication method for a pre-allocation mode according to an exemplary embodiment. The communication method shown in FIG. 3 can be applied to an AP.

Referring to FIG. 3, in step 310, the AP may receive an SBP request frame from the SBP requesting STA, where the SBP request frame may include a requirement for requesting the AP to initiate sensing measurement as a proxy AP. Step 310 may be similar to step 210 in FIG. 2, and repeated descriptions are omitted here for brevity.

In step 320, the AP may send an SBP response frame to the SBP requesting STA. In other words, the "message frame" in step 220 of FIG. 2 may be an SBP response frame, and the SBP response frame may include the sensing measurement setup ID. In the embodiment of pre-allocation mode in FIG. 3, the sensing measurement setup ID may be pre-allocated by the AP before the sensing measurement is set up between the AP and the responder. In addition, the "responder" herein may include the SBP requesting STA, that is, the SBP requesting STA may participate in the subsequent sensing measurement. However, this disclosure is not limited thereto, and the "responder" herein may not include the SBP requesting STA. In other words, the SBP requesting STA may not participate in the subsequent sensing measurement. Also, the terms "responder" and "responder device" may be used interchangeably herein.

FIG. 4 is a flowchart illustrating a communication method for a pre-allocation mode according to an exemplary embodiment. The communication method shown in FIG. 4 can be applied to an AP.

Referring to FIG. 4, in step 410, the AP may receive an SBP request frame from the SBP requesting STA, where the SBP request frame may include a requirement for requesting the AP to initiate sensing measurement as a proxy AP. Step 410 may be similar to step 310 in FIG. 3 and step 210 in FIG. 2, and repeated descriptions are omitted here for brevity.

In step 420, the AP may send an SBP response frame to the SBP requesting STA, where the SBP response frame may include the sensing measurement setup ID, and the sensing measurement setup ID may be pre-allocated by the AP before the sensing measurement is set up between the AP and the responder. Step 420 may be similar to step 320 of FIG. 3.

In step 430, the AP may send a sensing measurement setup request frame to the responder, where the sensing measurement setup request frame may include the sensing measurement setup ID allocated to the responder. According to an embodiment of this disclosure, the sensing measurement setup request frame may be sent to an appropriate responder to set up and perform a sensing measurement according to the requirement of sensing measurement in the SBP request frame. Since the sensing measurement setup ID is pre-allocated by the AP according to the requirement of sensing measurement in the SBP request frame, for the same SBP request frame, the sensing measurement setup ID sent to the SBP requesting STA through the SBP response frame may be the same as the sensing measurement setup ID sent to the responder through the sensing measurement setup request frame. Furthermore, the SBP requesting STA may be one of "responders", in which case the sensing measurement setup ID may not be additionally sent to the SBP requesting STA among the responders at step 430. However, this disclosure is not limited thereto, and the SBP requesting STA may not be a "responder".

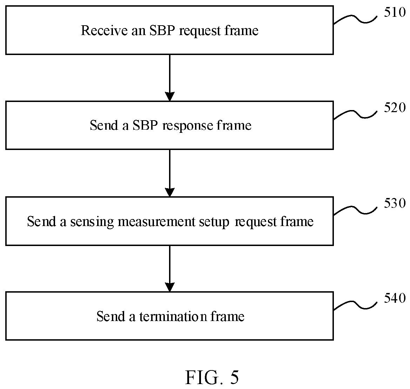

FIG. 5 is a flowchart illustrating a communication method for a pre-allocation mode according to an exemplary embodiment. The communication method shown in FIG. 5 can be applied to an AP.

Referring to FIG. 5, steps 510 to 530 may be similar to steps 410 to 430 in FIG. 4, and repeated descriptions are omitted here for brevity.

In step 540, the AP may send a termination frame to the SBP requesting STA. For example, the AP may send the termination frame to the SBP requesting STA if the sensing measurement setup is not completed with a proper responder in step 530. In other words, in case the AP has not set up a sensing measurement that meets the requirement of sensing measurement in the SBP request frame, the AP may send the termination frame to the SBP requesting STA, where the termination frame may indicate termination of the SBP process corresponding to the SBP request frame.

Although in FIG. 2 to FIG. 5, it is shown that various steps are performed sequentially, this disclosure is not limited thereto. Some of the steps may be performed simultaneously, or some of the steps may be omitted, or additional steps may further be included.

According to an embodiment of this disclosure, after receiving the SBP request frame from the SBP requesting STA, the proxy AP may reply with an SBP response frame, and the SBP response frame may carry a pre-allocated sensing measurement setup ID.

According to an embodiment of this disclosure, the proxy AP can set up a sensing measurement session(s) with some responders, and carry the pre-allocated measurement setup ID(s) in the sensing measurement setup request frame.

According to an embodiment of this disclosure, if the proxy AP fails to set up the sensing measurement with a proper responder (including a case where the SBP requesting STA participates in the SBP sensing measurement, or a case where the SBP requesting STA does not participate in the SBP sensing measurement) based on the WLAN sensing measurement requirement carried in the SBP request frame, the proxy AP sends the termination frame to the SBP requesting STA. Although the pre-allocated measurement setup ID is carried in the SBP response frame, the termination frame can identify the termination of the SBP process.

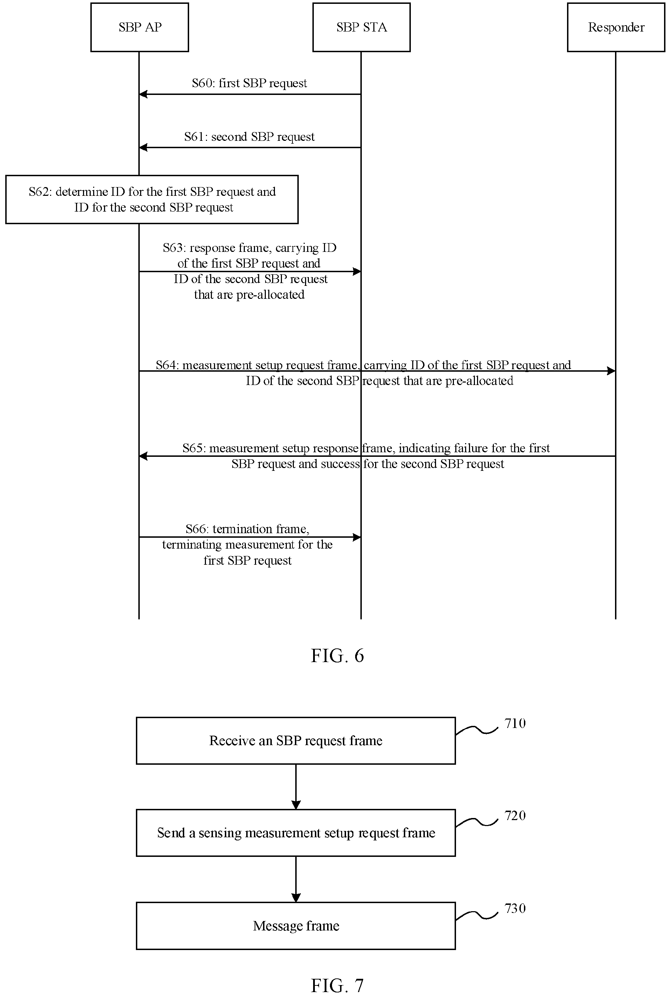

FIG. 6 illustrates a process of interactive communication for a pre-allocation mode according to an exemplary embodiment.

Referring to FIG. 6, in S60, SBP AP (i.e., the above-mentioned AP) may receive a first SBP request frame from SBP STA, where the first SBP request frame may include a requirement for requesting the AP to initiate a first sensing measurement as a proxy AP. In S61, SBP AP (i.e., the above-mentioned AP) may receive a second SBP request frame from SBP STA, where the second SBP request frame may include a requirement for requesting the AP to initiate a second sensing measurement as a proxy AP. For example, each of the requirement of first sensing measurement and the requirement of second sensing measurement may include the accuracy requirement of sensing measurement, the transmission power, the sensing measurement bandwidth, and the like. However, this is only exemplary and this disclosure is not limited thereto. Although it is shown in S60 and S61 that the first SBP request frame and the second SBP request frame are received from one SBP STA, this disclosure is not limited thereto. Corresponding SBP request frames may be received from different SBP STAs, respectively.

In S62, the SBP AP may determine a first sensing measurement setup ID for the first SBP request frame, and determine a second sensing measurement setup ID for the second SBP request frame. In other words, sensing measurement setup IDs are pre-allocated for the first SBP request frame and the second SBP request frame, respectively.

In S63, the SBP AP may send a response frame to the SBP STA, where the response frame may carry the pre-allocated first and second sensing measurement setup IDs.

In S64, the SBP AP may send a sensing measurement setup request frame to the responder, where the sensing measurement setup request frame may carry the first sensing measurement setup ID and the second sensing measurement setup ID.

In S65, the SBP AP may receive a sensing measurement setup response frame from the responder, where the sensing measurement setup response frame may indicate that the sensing measurement setup for the first SBP request frame fails, while the sensing measurement setup for the second SBP request frame succeeds.

In S66, the SBP AP may send a termination frame to the SBP STA, where the termination frame may indicate termination of the sensing measurement for the first SBP request frame.

Although it is shown in S64 and S65 that the SBP AP sends one sensing measurement setup request frame to a single responder and receives one sensing measurement setup response frame from the same responder, this is only for the convenience of illustration. The disclosure is not limited thereto. For example, the SBP AP may send the first sensing measurement setup request frame (which may carry the first sensing measurement setup ID) to a proper responder(s) according to the requirement of first sensing measurement in the first SBP request frame, receive the sensing measurement setup response frame from each responder respectively, and then determine, according to each sensing measurement setup response frame, whether the SBP AP has set up a proper sensing measurement with the responder that meets the requirement of first sensing measurement. In addition, the SBP AP may also send the second sensing measurement setup request frame (which may carry the second sensing measurement setup ID) to a proper responder(s) according to the requirement of second sensing measurement in the second SBP request frame, receive the sensing measurement setup response frame from each responder respectively, and then determine, according to each sensing measurement setup response frame, whether the SBP AP has set up a proper sensing measurement with the responder that meets the requirement of second sensing measurement.

Although an embodiment of two SBP request frames is shown in FIG. 6, this disclosure is not limited thereto. The communication method shown in FIG. 6 can be applied to an embodiment of one SBP request frame, and can also be applied to an embodiment of more SBP request frames.

FIG. 7 is a flowchart illustrating a communication method for a post-allocation mode according to an exemplary embodiment. The communication method shown in FIG. 7 can be applied to an AP.

Referring to FIG. 7, in step 710, the AP may receive an SBP request frame from the SBP requesting STA, where the SBP request frame may include a requirement for requesting the AP to initiate sensing measurement as a proxy AP.

In step 720, the AP may send a sensing measurement setup request frame to a responder, where the sensing measurement setup request frame may include a sensing measurement setup ID allocated to the responder. According to some embodiments of this disclosure, when the AP receives the SBP request frame, it can first set up the sensing measurement with a proper responder according to the requirement of sensing measurement, and allocate the sensing measurement setup ID in the setup process of the sensing measurement.

In step 730, the AP may send a message frame to the SBP requesting STA. In an embodiment of this disclosure, the message frame may include a sensing measurement setup ID for the SBP request frame. In other words, according to some embodiments of this disclosure, before sending the message frame, the AP may send a sensing measurement setup request frame to the responder according to the requirement of sensing measurement, where the sensing measurement setup request frame may include the sensing measurement setup ID allocated to the responder.

Since the AP sets up the sensing measurement before notifying the SBP requesting STA of the sensing measurement setup ID, this manner is called "post-allocation mode".

According to some embodiments of this disclosure, the message frame in step 730 may be an SBP response frame. For example, when the AP completes the sensing measurement setup with a proper responder, it may send an SBP response frame to the SBP requesting STA to notify the sensing measurement setup ID.

According to some embodiments of this disclosure, the message frame in step 730 may be a sensing measurement report frame. For example, when the AP completes the sensing measurement setup with the proper responder and completes the sensing measurement process, it may carry the sensing measurement setup ID while reporting the sensing measurement result to the SBP requesting STA.

It will be understood that the communication method shown in FIG. 7 is only exemplary, and this disclosure is not limited thereto. For example, the communication method shown in FIG. 7 may further include: in case that the AP does not set up a sensing measurement meeting the requirement of sensing measurement, the AP may send a termination frame to the SBP requesting STA, where the termination frame indicates termination of the SBP process corresponding to the SBP request frame. For example, in step 720, if the AP does not set up a sensing measurement with a proper responder according to the requirement of sensing measurement, it may send a termination frame in step 730 (instead of the "message frame" in the above-mentioned embodiment), thereby indicating termination of the corresponding SBP process.

According to some embodiments of this disclosure, after receiving the SBP request frame from the SBP requesting STA, the proxy AP can reply with the SBP response frame, where the SBP response frame indicates that the proxy AP accepts the request of the SBP requesting STA. This situation can be referred to as an explicit manner for responding to the SBP request frame. However, this disclosure is not limited thereto, and the SBP requesting frame may also be responded to in an implicit manner, that is, the proxy AP may not only send a response frame indicating acceptance of the SBP requesting STA's request. Specifically, the SBP request frame may carry a delay time for its response, and the AP can complete the sensing measurement setup and/or sensing measurement with a proper responder within the delay time. In this way, the AP may directly feed back a message frame (which may be an SBP response frame) indicating completion of the sensing measurement setup, or a sensing measurement report frame indicating the sensing measurement result, so that the SBP requesting STA can acknowledge that the SBP request frame sent by itself is accepted. For example, the delay time to receive the SBP response frame is 10 milliseconds.

According to some embodiments of this disclosure, the proxy AP sets up a sensing measurement session with some responders according to the requirement in the SBP request frame. During setup of the sensing measurement session, the responders (if the SBP requesting STA participates in the SBP sensing measurement, the responders include the SBP requesting STA) are allocated with measurement setup IDs.

According to some embodiments of this disclosure, if the SBP requesting STA does not participate in the subsequent SBP sensing measurement, the proxy AP carries the measurement setup ID(s) in the response frame and sends the response frame to the SBP requesting STA. Alternatively, the proxy AP carries the measurement setup ID(s) in the measurement report frame, and send the measurement report frame to the SBP requesting STA. However, this disclosure is not limited thereto, and these embodiments may also be applicable to the case where the SBP requesting STA participates in the subsequent SBP sensing measurement.

According to some embodiments of this disclosure, if the proxy AP does not set up a sensing measurement session with a responder, the proxy AP replies a termination frame to the SBP requesting STA.

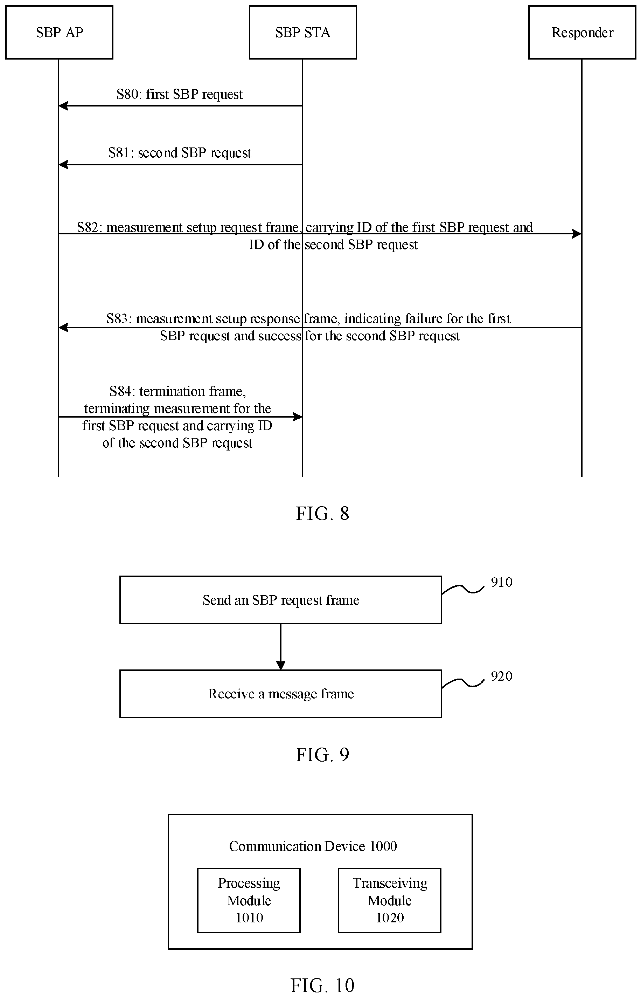

FIG. 8 illustrates a process of interactive communication for a post-allocation mode according to an exemplary embodiment. Although an embodiment of two SBP request frames is shown in FIG. 8, this disclosure is not limited thereto. The communication method shown in FIG. 8 can be applied to some embodiments of one SBP request frame, and can also be applied to some embodiments of more SBP request frames.

Referring to FIG. 8, in S80, the SBP AP (i.e., the above-mentioned AP) may receive a first SBP request frame from the SBP STA, where the first SBP request frame may include a requirement for requesting the AP to initiate a first sensing measurement as a proxy AP. In S81, the SBP AP (i.e., the above-mentioned AP) may receive a second SBP request frame from the SBP STA, where the second SBP request frame may include a requirement for requesting the AP to initiate a second sensing measurement as a proxy AP. For example, each of the requirement of first sensing measurement and the requirement of second sensing measurement may include sensing measurement accuracy requirements transmission power, sensing measurement bandwidth, and the like. However, this is only exemplary and this disclosure is not limited thereto. Although it is shown in S80 and S81 that the first SBP request frame and the second SBP request frame are received from one SBP STA, this disclosure is not limited thereto, and corresponding SBP request frames may be received from different SBP STAs, respectively.

In S82, the SBP AP may send a sensing measurement setup request frame to the responder, where the sensing measurement setup request frame may carry a first sensing measurement setup ID for the first SBP request frame and a second sensing measurement setup ID for the second SBP request frame.

In S83, the SBP AP may receive a sensing measurement setup response frame from the responder, where the sensing measurement setup response frame may indicate that the sensing measurement setup for the first SBP request frame fails, while the sensing measurement setup for the second SBP request frame succeeds. For example, the SBP AP does not set up a sensing measurement that meets the requirement of the first sensing measurement, but sets up a sensing measurement that meets the requirement of the second sensing measurement.

In S84, the SBP AP may send a termination frame to the SBP STA, where the termination frame may indicate termination of the SBP process corresponding to the first SBP request frame, and the termination frame may include the second sensing measurement setup ID corresponding to the second SBP request frame.

Although it is shown in S83 and S84 that the SBP AP sends a sensing measurement setup request frame to a single responder and receives the sensing measurement setup response frame from the same responder, this is only for the convenience of illustration. The disclosure is not limited thereto. For example, the SBP AP may send the first sensing measurement setup request frame (which may carry the first sensing measurement setup ID) to a proper responder(s) according to the requirement of first sensing measurement in the first SBP request frame, receive the sensing measurement setup response frame from each responder respectively, and then determine, according to each sensing measurement setup response frame, whether the SBP AP has set up a proper sensing measurement with the responder that meets the requirement of first sensing measurement. In addition, the SBP AP may also send the second sensing measurement setup request frame (which may carry the second sensing measurement setup ID) to a proper responder(s) according to the requirement of second sensing measurement in the second SBP request frame, receive the sensing measurement setup response frame from each responder respectively, and then determine, according to each sensing measurement setup response frame, whether the SBP AP has set up a proper sensing measurement with the responder that meets the requirement of second sensing measurement.

In addition, although only one termination frame is replied to different SBP request frames in S84, this disclosure is not limited thereto, and corresponding termination frames may be replied to respective SBP request frames.

Although it is shown in FIG. 2 to FIG. 8 that various steps are performed sequentially, this disclosure is not limited thereto, and some of the steps may be performed simultaneously, or some of the steps may be omitted, or other steps may also be included.

For example, in some embodiments of this disclosure, a communication method for SBP may include: sending, by an AP, a message frame to an SBP requesting STA, where the message frame may include a sensing measurement setup ID pre-allocated to a responder and/or the SBP requesting STA.

For example, in some other embodiments of this disclosure, a communication method for SBP may include: sending, by an AP, a message frame to an SBP requesting STA, where the message frame may include a sensing measurement setup ID that is allocated to a responder and/or the SBP requesting STA during a setup process of sensing measurement.

For example, in some other embodiments of this disclosure, a communication method for SBP may include: sending, by an AP in case that the AP does not set up a sensing measurement that meets the requirement of sensing measurement, a termination frame to an SBP requesting STA, where the termination frame may indicate termination of an SBP process corresponding to the SBP request frame.

FIG. 9 is a flowchart illustrating another communication method according to an exemplary embodiment. The communication method shown in FIG. 9 can be applied to an SBP requesting STA (which may also be referred to as "SBP STA", "SBP requesting STA" herein).

Referring to FIG. 9, in step 910, the SBP requesting STA may send a first SBP request frame to the AP, where the first SBP request frame may include a requirement for requesting the AP to initiate a first sensing measurement as a proxy AP. In step 920, the SBP requesting STA may receive a first message frame from the AP, where the first message frame may carry a sensing measurement setup ID.

The steps shown in FIG. 9 are only exemplary, and this disclosure is not limited thereto. For example, the communication method shown in FIG. 9 may also include various operations performed by the SBP STA in FIG. 6 and FIG. 8.

According to some embodiments of this disclosure, for example, as shown in FIG. 6, the sensing measurement setup ID in step 920 may be pre-allocated by the AP before the sensing measurement is set up between the AP and the responder, where the first message frame may be an SBP response frame.

According to some embodiments of this disclosure, for example, as shown in FIG. 8, the sensing measurement setup ID in step 920 may be allocated to the responder by the AP during the setup process of sensing measurement between the AP and the responder. In such embodiments, the first message frame may be an SBP response frame or a sensing measurement report frame.

According to some embodiments of this disclosure, for example, as shown in FIG. 6 and FIG. 8, the communication method in FIG. 9 may further include: receiving, by the SBP requesting STA in case that the AP does not set up a sensing measurement that meets the requirement of first sensing measurement, a termination frame from the AP, where the termination frame indicates termination of the SBP process corresponding to the first SBP request frame.

According to some embodiments of this disclosure, for example, as shown in FIG. 8, the communication method in FIG. 9 may further include: sending, by the SBP requesting STA, a second SBP request frame to the AP, where the second SBP request frame includes a requirement for requesting the AP to initiate a second sensing measurement; and receiving, by the SBP requesting STA in case that the AP does not set up a sensing measurement that meets the requirement of the first sensing measurement but sets up a sensing measurement that meets the requirement of the second sensing measurement, a termination frame from the AP as the first message frame, where the termination frame indicates termination of the SBP process corresponding to the first SBP request frame, and the termination frame includes a sensing measurement setup ID corresponding to the second SBP request frame.

FIG. 10 is a block diagram illustrating a communication device 1000 according to an exemplary embodiment. The communication device 1000 in FIG. 10 may include a processing module 1010 and a transceiving module 1020. In an embodiment of this disclosure, the communication device 1000 shown in FIG. 10 may be applied to an AP. In another embodiment of this disclosure, the communication device 1000 shown in FIG. 10 may be applied to an SBP requesting STA.

In the case where the communication device 1000 shown in FIG. 10 is applied to the AP, the transceiving module 1020 may be configured to: receive a first SBP request frame from the SBP requesting STA, where the first SBP request frame includes a requirement for requesting the AP to initiate a first sensing measurement as a proxy AP; and send a first message frame to the SBP requesting STA, where the first message frame carries a sensing measurement setup ID. The processing module 1010 may be configured to control the overall operation of the communication device 1000 and the operation of the transceiving module 1020. For example, in the pre-allocation mode, the processing module 1010 may predetermine (pre-allocate) the sensing measurement setup ID. In the post-allocation mode, the processing module 1010 may determine whether the sensing measurement setup for the corresponding SBP request frame is completed. In other words, the communication device 1000 shown in FIG. 10 can implement the communication method described with reference to FIG. 2 to FIG. 5 and FIG. 7 and the operations performed by the SBP AP in FIG. 6 and FIG. 8. Repeated description is omitted here to avoid redundancy.

In the case where the communication device 1000 shown in FIG. 10 is applied to the SBP requesting STA, the transceiving module 1020 may be configured to: send a first SBP request frame to the AP, where the first SBP request frame includes a requirement for requesting the AP to initiate a first sensing measurement as a proxy AP; and receive a first message frame from the AP, where the first message frame carries a sensing measurement setup ID. The processing module 1010 may be configured to control the overall operation of the communication device 1000 and the operation of the transceiving module 1020. In other words, the communication device 1000 shown in FIG. 10 can implement the communication method described with reference to FIG. 9 and the operations performed by the SBP STA in FIG. 6 and FIG. 8. Repeated description is omitted here to avoid redundancy.

It will be understood that the communication device 1000 shown in FIG. 10 is only exemplary, and embodiments of this disclosure are not limited thereto. For example, the communication device 1000 may also include other modules, such as a memory module and the like. In addition, various modules in the communication device 1000 may be combined into more complex modules, or may be divided into more individual modules.

The signalings for sending measurement setup ID in a complete SBP scenario are defined in the communication method and communication device according to the embodiments of this disclosure define. Based on the communication method and communication device according to the embodiments of this disclosure, the mechanism of SBP response and the setup mechanism of sensing measurement in the SBP scenario are improved, so that it can be better applied to SBP scenarios.

Based on the same principle as the method according to the embodiments of this disclosure, some embodiments of this disclosure further provide an electronic device, which includes a processor and a memory. The memory stores machine-readable instructions (which may also be referred to as the "computer program"), and the processor is configured to, by executing the machine-readable instructions, implement the methods described with reference to FIG. 2 to FIG. 9.

Embodiments of this disclosure further provide a computer-readable storage medium, on which a computer program is stored. When the computer program is executed by a processor, the methods described with reference to FIG. 2 to FIG.9 are implemented.

In exemplary embodiments, the processor may include circuits configured to implement or execute various exemplary logical blocks and modules described in conjunction with this disclosure, for example, CPU (Central Processing Unit), general processor, DSP (Digital Signal Processor), ASIC (Application Specific Integrated Circuit), FPGA (Field Programmable Gate Array) or other programmable logic devices, transistor logic devices, hardware components or any combination thereof. The processor may also be a combination that realizes computing functions, for example, a combination of one or more microprocessors, a combination of DSP and a microprocessor, and the like.

In an exemplary embodiment, the memory may be, for example, ROM (Read Only Memory), RAM (Random Access Memory), EEPROM (Electrically Erasable Programmable Read Only Memory), CD-ROM (Compact Disc Read Only Memory) or other compact disc storage, optical disc storage (including compact disc, laser disc, optical disc, digital versatile disc, Blu-ray disc, and the like), magnetic disk storage medium or other magnetic storage device, or any other medium that can be used to carry or store program code in the form of instructions or data structures and that can be accessed by a computer, but is not limited thereto.

It should be understood that although the various steps in the flow charts of the drawings are shown sequentially according to the arrows, these steps are not necessarily executed sequentially in the order indicated by the arrows. Unless otherwise specified herein, there is no strict order restriction on the execution of these steps, and they can be executed in other orders. In addition, at least some of the steps in the flowcharts of the accompanying drawings may include multiple sub-steps or multiple stages, and these sub-steps or stages may not necessarily be executed at the same time, but may be executed at different times, and the order of execution is not necessarily in sequence, but may be performed in turn or alternately with at least a part of other steps or sub-steps or stages of other steps.

While this disclosure has been shown and described with reference to certain embodiments thereof, it will be understood by those skilled in the art that various changes in form and details may be made without departing from the scope of this disclosure. Therefore, the scope of this disclosure should not be defined by the embodiments, but should be defined by the appended claims and their equivalents.

## Claims

1. A communication method for sensing by proxy (SBP), comprising:
receiving, by an access point (AP), a first SBP request frame from an SBP requesting station, wherein the first SBP request frame comprises a requirement for requesting the AP to initiate a first sensing measurement as a proxy AP; and
sending, by the AP, a first message frame to the SBP requesting station, wherein the first message frame carries a sensing measurement setup identifier.

2. The communication method according to claim 1, wherein the sensing measurement setup identifier is pre-allocated by the AP before a sensing measurement is set up between the AP and a responder, and
wherein the first message frame is an SBP response frame.

3. The communication method according to claim 2, further comprising:
sending, by the AP, a sensing measurement setup request frame to the responder, wherein the sensing measurement setup request frame comprises the pre-allocated sensing measurement setup identifier.

4. The communication method according to claim 1, further comprising:
sending, by the AP before sending the first message frame, a sensing measurement setup request frame to a responder according to the requirement of the first sensing measurement, wherein the sensing measurement setup request frame comprises the sensing measurement setup identifier allocated to the responder.

5. The communication method according to claim 4, wherein the first message frame is an SBP response frame or a sensing measurement report frame.

6. The communication method according to any one of claims 1 to 4, further comprising:
sending, by the AP in case not setting up a sensing measurement that meets the requirement of the first sensing measurement, a termination frame to the SBP requesting station, wherein the termination frame indicates termination of an SBP process corresponding to the first SBP request frame.

7. The communication method according to claim 4, further comprising:
receiving, by the AP, a second SBP request frame from the SBP requesting station, wherein the second SBP request frame comprises a requirement for requesting the AP to initiate a second sensing measurement; and
sending, by the AP in case not setting up a sensing measurement that meets the requirement of the first sensing measurement but setting up a sensing measurement that meets the requirement of the second sensing measurement, a termination frame to the SBP requesting station as the first message frame,
wherein the termination frame indicates termination of an SBP process corresponding to the first SBP request frame, and the termination frame comprises the sensing measurement setup identifier corresponding to the second SBP request frame.

8. A communication method for sensing by proxy (SBP), comprising:
sending, by an SBP requesting station, a first SBP request frame to an access point (AP), wherein the first SBP request frame comprises a requirement for requesting the AP to initiate a first sensing measurement as a proxy AP; and
receiving, by the SBP requesting station, a first message frame from the AP, wherein the first message frame carries a sensing measurement setup identifier.

9. The communication method according to claim 8, wherein the sensing measurement setup identifier is pre-allocated by the AP before a sensing measurement is set up between the AP and a responder, and
wherein the first message frame is an SBP response frame.

10. The communication method according to claim 8, wherein the sensing measurement setup identifier is allocated to the responder by the AP during a setup process of a sensing measurement between the AP and the responder.

11. The communication method according to claim 10, wherein the first message frame is an SBP response frame or a sensing measurement report frame.

12. The communication method according to any one of claims 8 to 11, further comprising:
receiving, by the SBP requesting station in case the AP does not set up a sensing measurement that meets the requirement of the first sensing measurement, a termination frame from the AP, wherein the termination frame indicates termination of an SBP process corresponding to the first SBP request frame.

13. The communication method according to claim 8, further comprising:
sending, by the SBP requesting station, a second SBP request frame to the AP, wherein the second SBP request frame comprises a requirement for requesting the AP to initiate a second sensing measurement; and
receiving, by the SBP requesting station in case the AP does not set up a sensing measurement that meets the requirement of the first sensing measurement but sets up a sensing measurement that meets the requirement of the second sensing measurement, a termination frame from the AP as the first message frame,
wherein the termination frame indicates termination of an SBP process corresponding to the first SBP request frame, and the termination frame comprises the sensing measurement setup identifier corresponding to the second SBP request frame.

14. A communication device for sensing by proxy (SBP), comprising:
a transceiving module, configured to: receive a first SBP request frame from an SBP requesting station, wherein the first SBP request frame comprises a requirement for requesting an access point (AP) to initiate a first sensing measurement as a proxy AP; and send a first message frame to the SBP requesting station, wherein the first message frame carries a sensing measurement setup identifier.

15. A communication device for sensing by proxy (SBP), comprising:
a transceiving module, configured to: send a first SBP request frame to an access point (AP), wherein the first SBP request frame comprises a requirement for requesting the AP to initiate a first sensing measurement as a proxy AP; and receive a first message frame from the AP, wherein the first message frame carries a sensing measurement setup identifier.

16. An electronic device, comprising a memory, a processor, and a computer program stored on the memory and executable on the processor, wherein the processor is configured to, upon executing the computer program, implement the method according to any one of claims 1 to 7 or any one of claims 8-13.

17. A computer-readable storage medium, storing a computer program thereon, wherein the computer program is used for, upon being executed by a processor, implementing the method according to any one of claims 1 to 7 or any one of claims 8-13.
